# EUROPÄISCHE PATENTANMELDUNG

(11) **EP 2 706 307 A1**
(43) Veröffentlichungstag der Anmeldung: **12.03.2014**
(21) Anmeldenummer: 12183687.8
(22) Anmeldetag: 10.09.2012
(51) Int. Cl.: F24J 2/07, F24J 2/24, F24J 2/46, F24J 2/48

(54) **Thermisches Solarturm-Kraftwerk**

(71) Anmelder: Wieghardt, Kai, 44869 Bochum (DE); Cordes, Sebastian, 51067 Köln (DE); Langenberg, Georg, 40225 Düsseldorf (DE); Prosinecki, Tobias, 52066 Aachen (DE)
(72) Erfinder: Dr. Wieghardt, Kai, 44869 Bochum (DE)
(74) Vertreter: Patentanwälte ter Smitten Eberlein Rütten Partnerschaftsgesellschaft

(57) **Zusammenfassung**

Die Erfindung bezieht sich auf ein thermisches Solarturm-Kraftwerk (10) mit einem zentralen Solarempfänger (12) und einem Heliostaten-Feld (14).

Der Solarempfänger (12) weist einen einen Hohlraum (18) umschließenden Empfängerkörper (20) auf, der in dem Hohlraum (18) ein Absorptionselement (41 - 46) aufweist, in dem eine Wärmeträger-Flüssigkeit fließt. Der Empfängerkörper (20) weist eine zu dem Heliostaten-Feld (14) nach unten orientierte Strahlungsöffnung (22) auf, wobei die Eröffnungsebene (27) der Strahlungsöffnung (22) um mindestens 10° zur Horizontalebene (62) geneigt ist.

## Beschreibung

Die Erfindung bezieht sich auf ein thermisches Solarturm-Kraftwerk mit einem zentralen Solarempfänger und einem Heliostaten-Feld.

Bei einem thermischen Solarturm-Kraftwerk wird die Sonnenstrahlung durch das Heliostaten-Feld, das aus einer Vielzahl nachgeführter Heliostaten-Spiegel besteht, auf einen oder mehrere Solarempfänger gerichtet, der bzw. die in der Regel von einem Turm in einer Höhe von 50m bis 200m gehalten wird bzw. werden. Der Solarempfänger weist einen Empfängerkörper mit mehreren Absorptionselementen auf, in denen die durch das Heliostaten-Feld auf den Solarempfänger konzentrierte Solarstrahlung auf ein Wärmeträger-Flüssigkeit übertragen wird, die die aufgenommene Wärmeenergie für einen thermischen Kraftwerksprozess, beispielsweise mit Hilfe eines Dampfturbosatzes, nutzbar macht.

Bei der Solarempfänger-Bauform unterschreitet man die externe Bauform, bei der die Absorptionselemente außen angebracht sind, von der internen Bauform, bei der die Absorptionselemente innerhalb eines Hohlraums angeordnet sind. Die externe Solarempfänger-Bauform weist erhebliche Strahlungsverluste auf, so dass die Wärmeträger-Flüssigkeit in den Absorptionselementen nachts einfrieren würde, was wiederum eine abendliche Entleerung und morgendliche Wiederbefüllung erforderlich macht. Die interne Solarempfänger-Bauform weist den prinzipbedingten Nachteil auf, dass die nach unten zu dem Heilostaten-Feld orientierte Strahlungsöffnung relativ klein ist. Ferner werden bei den aus dem Stand der Technik bekannten internen Solarempfänger-Bauformen als Wärmeträger ausschließlich Gase eingesetzt, um ein nächtliches Einfrieren des Wärmeträger- Fluides zu vermeiden.

Aufgabe der Erfindung ist es demgegenüber, ein thermisches Solarturm-Kraftwerk mit einem Solarempfänger mit verbessertem Wirkungsgrad und verringerten Strahlungsverlusten zu schaffen.

Diese Aufgabe wird erfindungsgemäß durch ein thermisches Solarturm-Kraftwerk mit den Merkmalen des Anspruchs 1 gelöst.

Der erfindungsgemäße Solarempfänger weist einen Empfängerkörper auf, der einen Hohlraum umschließt, wobei in dem Hohlraum mindestens ein Absorptionselement angeordnet ist, in dem eine Wärmeträger-Flüssigkeit fließt. Die Verwendung einer Flüssigkeit als Wärmeträger-Fluid vermeidet u.a. hohe Innendrücke in dem Absorptionselement, und ermöglicht daher relativ geringe Wanddicken des Absorptionselements. Bei der Verwendung von Rohren für das Absorptionselement kann daher beispielsweise die Rohr-Wanddicke kleiner als 10 % des Rohr-Durchmessers ausgebildet sein. Hierdurch wiederum wird das Eigengewicht des Absorptionselements verringert, wird der Wärmeübergang durch die Absorptionselement- Wand verbessert und wird die Lebensdauer des Absorptionselements erhöht. Mit einem flüssigen Wärmeträger können Wärmeträger-Temperaturen von weit über 500 °C realisiert werden, wodurch der Wirkungsgrad und das Betriebsverhalten des Solarempfängers verbessert werden. Auf diese Weise lassen sich thermische Kraftwerk- Leistungsgrößen von mehr als 50 MW beherrschen.

Der Empfängerkörper weist eine zu dem Heliostaten-Feld nach unten orientierte Strahlungsöffnung auf, wobei die Öffnungsebene der Strahlungsöffnung um mindestens 10° und höchstens 70°, besonders bevorzugt zwischen 20° und 50° zur Horizontalebene geneigt ist. Das Heliostaten-Feld ist außerhalb des Äquatorbereichs schwerpunktmäßig nördlich oder südlich des Solarempfängers angeordnet. Durch eine entsprechende Neigung der Strahlungsöffnungs-Öffnungsebene nach Norden bzw. Süden wird die jahresdurchschnittliche effektive Öffnungsfläche entsprechend vergrößert. Eine entsprechende Neigung der Strahlungsöffnungs- Öffnungsebene ist deshalb keinesfalls selbstverständlich, weil die Empfängerkörper im Stand der Technik stets rechteckig ausgebildet und vertikal ausgerichtet sind, so dass sich hieraus im Stand der Technik eine horizontale Öffnungsebene ergab.

Der erfindungsgemäße Empfängerkörper weist jedoch eine zur Horizontalebene geneigte Strahlungsöffnung auf, was dadurch ermöglicht wird, dass die betreffenden Absorptionselemente an ihrem öffnungsseitigen unteren Ende entsprechend zur Horizontalebene geneigt, oder jedenfalls entsprechend gestuft ausgebildet bzw. angeordnet sind. Für jedes Absorptionselement werden bevorzugt mehrere vertikal angeordnete Absorptionsrohre gleicher Länge verwendet, die an ihrem unteren und oberen Ende durch ein quer verlaufendes Sammelrohr und Verteilerrohr zusammengehalten werden. Die identische vertikale Länge aller Absorptionsrohre eines Absorptionselements ist schon deshalb dringend geboten, weil nur auf diese Weise bei einem Temperaturhub von mehreren 10 K extreme Spannungen zwischen den Absorptionsrohren eines Absorptionselements vermieden werden können.

Die Sammel- und Verteilerrohre eines Absorptionselements können ungefähr die Neigung des angrenzenden Strahlungsöffnung-Randes aufweisen. Alternativ können in Umfangsrichtung relativ kurze Absorptionselemente treppenartig aneinandergereiht werden, um den Empfängerkörper auf diese Weise an den Verlauf des geneigten Strahlungsöffnungs- Randes anzupassen. Es sind auch Zwischenformen von leicht geneigten Sammel- und Verteilerrohren eines Absorptionselements denkbar, wobei die Neigung der Sammel- und Verteilerrohre nicht exakt der lokalen Neigung des Randes der Strahlungsöffnung zur Horizontalebene entspricht, die Absorptionselemente jedoch ebenfalls treppenartig aneinandergereiht sind, um die lokale Neigung des Strahlungsöffnungs- Öffnungsrandes möglichst genau nachzubilden. In jedem vorgenannten Fall ist das Absorptionselement in Draufsicht als Parallelogramm ausgebildet, dessen Parallelseiten und Absorptionsrohre vertikal ausgerichtet sind.

Gemäß einer bevorzugten Ausgestaltung weist das Absorptionselement mindestens ein Absorptionsrohr auf, das aus austenitischem Stahl oder einer Nickelbasis-Legierung besteht.

Vorzugsweise ist der Empfängerkörper im Wesentlichen als schräg angeschnittener vertikaler Prismenkörper ausgebildet, wobei die die aktive Seitenwand des Prismenkörpers bildenden Absorptionselemente jeweils in einer Vertikalebene stehen.

Gemäß einer bevorzugten Ausgestaltung weist der Solarempfänger ein Verschlusselement auf, das zwischen einer Schließposition und einer Öffnungsposition bewegt werden kann. In der Schließposition verschließt das Verschlusselement die Strahlungsöffnung, wohingegen die Strahlungsöffnung in der Öffnungsposition des Verschlusselements geöffnet ist. Sobald keine ausreichende Solarstrahlung zur Verfügung steht oder der Solarempfänger aus anderen Gründen außer Betrieb genommen werden soll, kann die Strahlungsöffnung durch das Verschlusselement verschlossen werden, beispielsweise um ein Einfrieren der Wärmeträger-Flüssigkeit zu vermeiden. Bei entsprechender thermischer Isolation des Verschlusselements und des Solarempfängers kann auf diese Weise auch einen nächtliches Einfrieren der Wärmeträger-Flüssigkeit über 12 Stunden oder länger vermieden werden, so dass ein nächtliches Entleeren und morgendliches Wiederbefüllen nicht mehr erforderlich ist.

Zur Verhinderung des Einfrierens der Wärmeträger-Flüssigkeit können auch separate Heizelemente vorgesehen sein, die bei Bedarf die Temperatur der Absorptionselemente aktiv oberhalb des Gefrierpunkts der Wärmeträger-Flüssigkeit halten.

Das Verschlusselement kann optional in seiner Schließposition außenseitig auch als Zielfläche zur Kalibrierung der Heliostaten-Spiegel genutzt werden. Alternativ oder ergänzend kann das Verschlusselement in seiner Schließposition auch als Wartungsplattform für Montage- oder Wartungsarbeiten an den Absorptionselementen genutzt werden.

Grundsätzlich kann die Kinematik des Verschlusselements auf verschiedene Weise realisiert sein, beispielsweise als Klappmechanismus, rollladenartiger Mechanismus, ventilschieber-Mechanismus etc. Besonders bevorzugt ist ein Mechanismus, der auch bei starkem Wind eine sichere Schließ- und Öffnungsbewegung des verschlusselements gewährleistet. Hierzu ist insbesondere ein Rollladen- Verschlusselement mit einer Rollladen- Kinematik geeignet, wobei das Verschlusselement durch gelenkig miteinander verbundene Rollladenstäbe gebildet wird, die in entsprechenden Führungsschienen zwischen der Öffnungsposition und der Schließposition verschiebbar gelagert sind.

Vorzugsweise ist die Wärmeträger-Flüssigkeit eine Salzschmelze, zum Beispiel ein eutektisches Gemisch von Natrium- und Kaliumnitrat. Alternativ kann die Wärmeträger-Flüssigkeit auch ein flüssiges Metall sein, beispielsweise Natrium oder eine eutektische Natrium-Kalium-Legierung. Derartige Wärmeträger-Flüssigkeiten sind in dem für Dampfkraftwerk-Prozesse relevanten Temperaturbereich zwischen ca. 280°C und 580°C und darüber hinaus chemisch stabil und neigen nicht zum Verdampfen.

Im Folgenden werden unter Bezugnahme auf die Zeichnungen mehrere Ausführungsbeispiele der Erfindung näher erläutert.

Es zeigen:
Figur 1 eine schematische Darstellung eines thermischen Solarturm-Kraftwerks mit einem zentralen Solarempfänger und einem Heliostaten-Feld,
Figur 2 einen Längsschnitt des Solarempfängers der Figur 1,
Figur 3 eine Draufsicht auf ein stirnseitiges bzw. rückseitiges rechteckiges Absorptionselement des Solarempfängers der Figur 1,
Figur 4 einen Längsschnitt des Absorptionselements der Figur 3,
Figur 5 eine Draufsicht auf ein seitliches parallelogrammförmiges Absorptionselement des Solarempfängers der Figur 1,
Figuren 6 und 7 zwei alternative Ausführungsbeispiele eines seitlichen Absorptionselement,
Figur 8 einen Längsschnitt eines dachseitigen Absorptionselements des Solarempfängers der Figur 1, und
Figur 9 einen Längsschnitt eines kombinierten Rückwand-Dach-Absorptionselements.

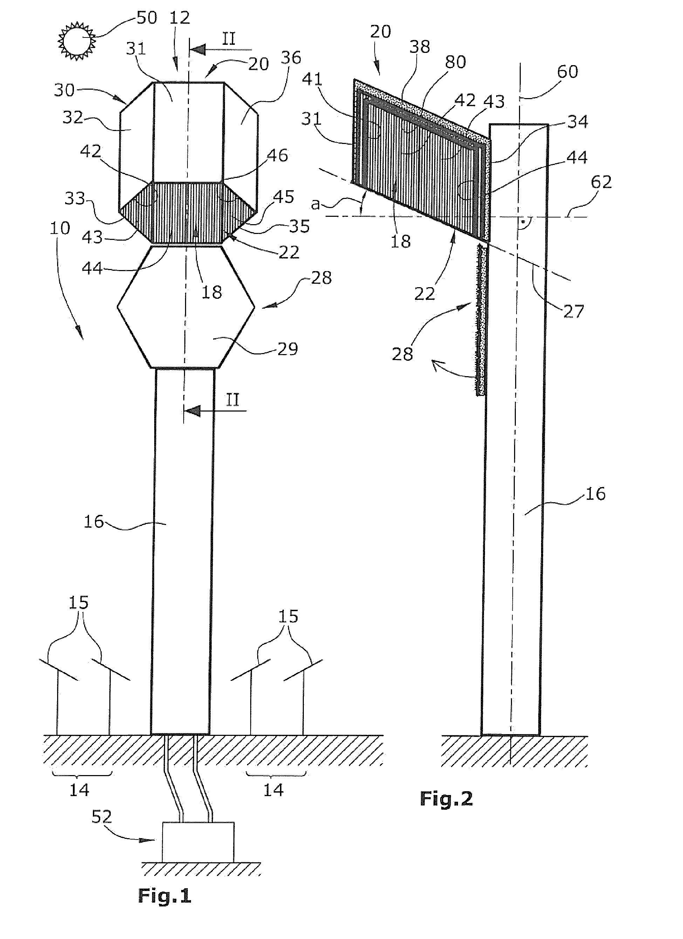

In der Figur 1 ist schematisch ein thermisches Solarturm-Kraftwerk 10 mit einem zentralen Solarempfänger 12, einem Heliostaten-Feld 14 und einer Generatorstation 52 dargestellt. Jeder Heliostat weist einen Spiegel 15 auf, der über eine entsprechende Stellmimik derart ständig nachgeführt wird, dass die von der Sonne 50 kommende Sonnenstrahlung stets auf den Solarempfänger 12 gerichtet ist.

Der Solarempfänger 12 wird von einem in einer Vertikalen 60 stehenden Turm 16 in einer Höhe von 50 m bis 200 m gehalten. Die von dem Heliostaten-Feld 14 zu dem Solarempfänger 12 reflektierte Sonnenstrahlung wird in dem Solarempfänger 12 von einer Wärmeträger-Flüssigkeit absorbiert, die in einem geschlossenen Kreislauf durch eine Pumpe zu der Generatorstation 52 und von dort wieder zurück zu dem Solarempfänger 12 gepumpt wird. Als Wärmeträger-Flüssigkeit dient vorliegend ein wasserfreies flüssiges Nitratsalz, das bevorzugt ein Natrium-oder Kaliumnitrat ist, und für Arbeitstemperaturen bis zu 600 °C geeignet ist. In der Generatorstation 52 gibt das Wärmeträger-Fluid seine Wärme an einen Wärmespeicher und/oder an einen Dampfturbinen-Kreis ab, durch den eine Dampfturbine angetrieben wird, die ihrerseits einen elektrischen Generator antreibt.

In den Figuren 1 und 2 ist der Solarempfänger 12 im Detail dargestellt. Der Solarempfänger 12 wird von einem hohlen Empfängerkörper 20 gebildet, der außenseitig ein wärmeisoliertes Empfängergehäuse 30 mit sechs seitlichen Gehäuseelementen 31-36 und einem Dach-Gehäuseelement 38 und innenseitig sieben korrespondierende Absorptionselemente 41-46,80 aufweist. Die Gehäuseelemente 31-36,38 weisen jeweils eine reflektierende Außenschicht, eine Tragkonstruktion und eine Wärmeisolationsschicht auf. Der Empfängerkörper 20 umschließt einen Hohlraum 18 und weist einen unten liegende Strahlungsöffnung 22 auf, so dass der Hohlraum 18 nach unten geöffnet ist. Der Empfängerkörper 20 ist in Draufsicht von oben als angeschrägtes gleichseitiges sechseckiges Prisma ausgebildet, wobei die Strahlungsöffnung 22 eine Eröffnungsebene 27 aufweist, die in einem Öffnungsebenen-Winkel a von ungefähr 25° zur Horizontalebene 62 geneigt ist. Die Ausrichtung der Neigung der Eröffnungsebene 27 nach Norden oder Süden und die Größe des Öffnungsebenen-Winkels a hängt von der geographischen Breite bzw. der Entfernung vom Äquator des Standortes des Solarturm-Kraftwerks 10 ab.

Die vertikale Erstreckung aller seitlichen Gehäuseelemente 31-36 und aller korrespondierender Absorptionselemente 41-46 ist über den gesamten Umfang ungefähr gleich, so dass der Empfängerkörper 20 in dem in der Figur 2 dargestellten Längsschnitt ungefähr die Form eines Parallelogramms aufweist, wobei die Rückseite und die Stirnseite vertikal ausgerichtet sind. Unterhalb der Strahlungsöffnung 22 ist ein Verschlusselement 28 vorgesehen, durch das die Strahlungsöffnung 22 bei Bedarf vollständig verschlossen werden kann. Das Verschlusselement 28 ist vorliegend als Rollladen 29 ausgebildet, der aus der in der Figur 2 dargestellten Öffnungsposition in eine nicht dargestellte Schließposition nach oben bewegt werden kann, in der der Rollladen 29 die Strahlungsöffnung 22 vollständig verschließt. Der Rollladen 29 ist gut wärmeisolierend ausgebildet. Der Rollladen 29 kann, bezogen auf die Schließposition, auf seiner Außenseite eine Zielfläche zur Kalibrierung der Spiegel 15 bilden, und kann hierfür insbesondere eine entsprechende Zielmarkierung aufweisen.

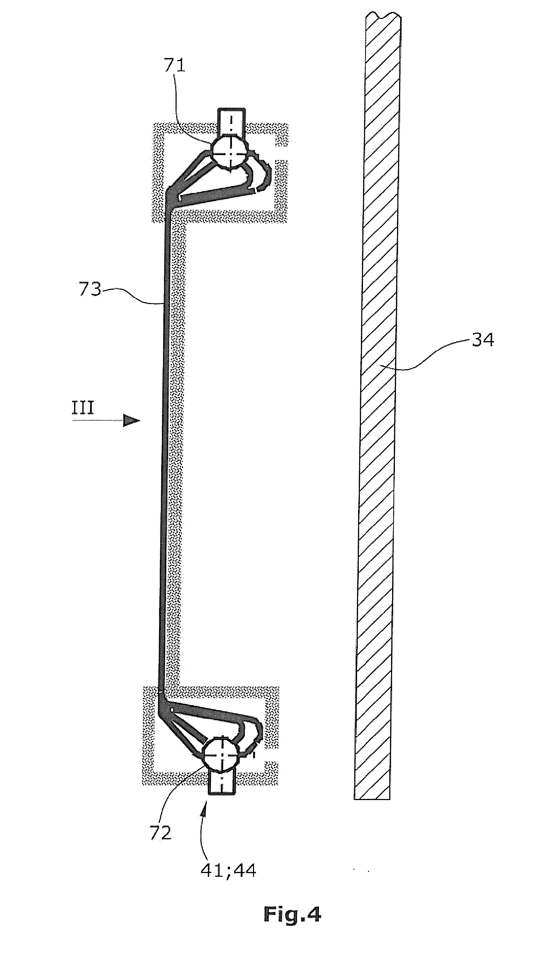

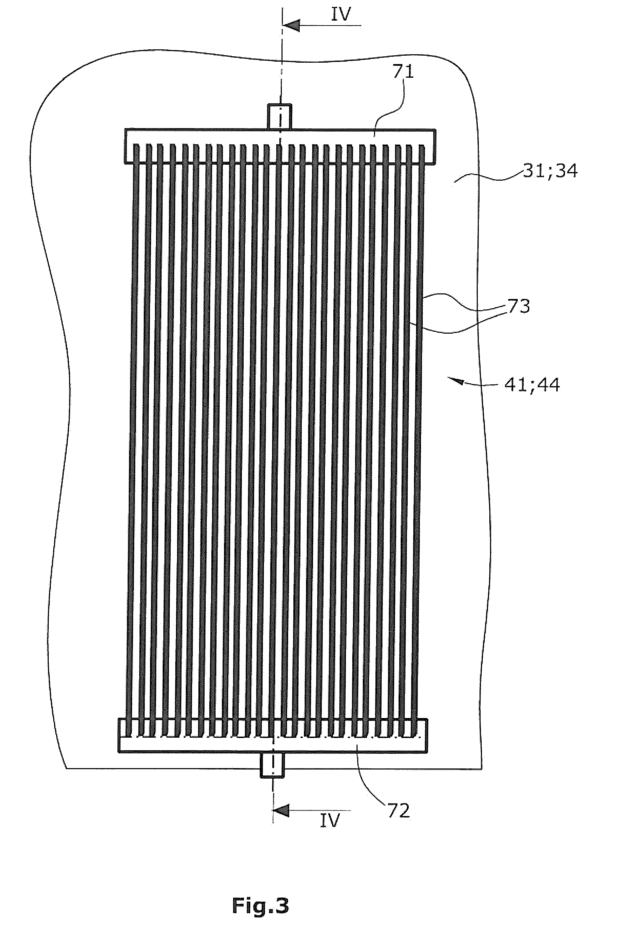

In den Figuren 3 und 4 ist das rückseitige bzw. stirnseitige Absorptionselement 41;44 in einer frontalen Draufsicht bzw. im Längsschnitt dargestellt. Das Absorptionselement 41:44 ist in Draufsicht rechteckig ausgebildet, und weist ein unteres horizontales Verteilerrohr 72, ein oberes horizontales Sammelrohr 71 sowie, zwischen dem Verteilerrohr 72 und dem Sammelrohr 71, eine Vielzahl vertikaler Absorptionsrohre 73 gleicher Länge auf. Die Absorptionsrohre 73 sind an ihren Längsenden mit dem Sammelrohr 71 bzw. dem Verteilerrohr 72 verschweißt. Alle Bauteile des Absorptionselements 41;44 bestehen aus einem austenitischen Stahl oder aus einer Nickelbasis-Legierung. Die Dicke der Rohrwand der Absorptionsrohre 73 beträgt weniger als 1/10 des äußeren Rohrdurchmessers,

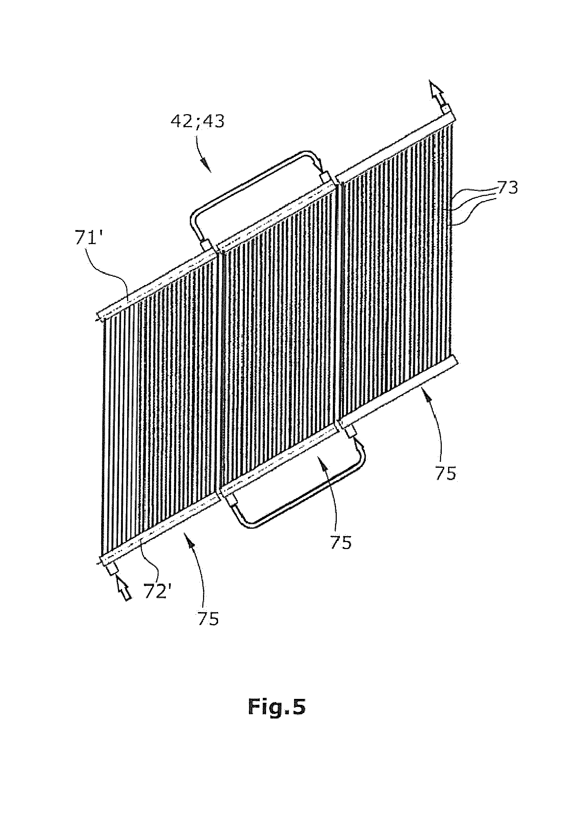

In der Figur 5 ist ein erstes Ausführungsbeispiel eines seitlichen Absorptionselements 42;43 bzw. 45,46 in seitlicher Draufsicht dargestellt. Das Absorptionselement 42;43 bzw. 45;46 besteht jeweils aus drei Einzelelementen 75, die fluidisch in Reihe zusammengeschaltet sind. Jedes Einzelelement 75 weist ein zur Horizontalebene geneigtes Verteilerrohr 72' und ein parallel dazu geneigtes Sammelrohr 71' auf, zwischen denen mehrere vertikale Absorptionsrohre 73 angeordnet sind. Die Neigung des untenliegenden Verteilerrohrs 72' entspricht der lokalen Neigung des angrenzenden Öffnungsrandes des Empfängergehäuses 30 bzw. des betreffenden Gehäuseelementes 32,33 bzw. 35,36.

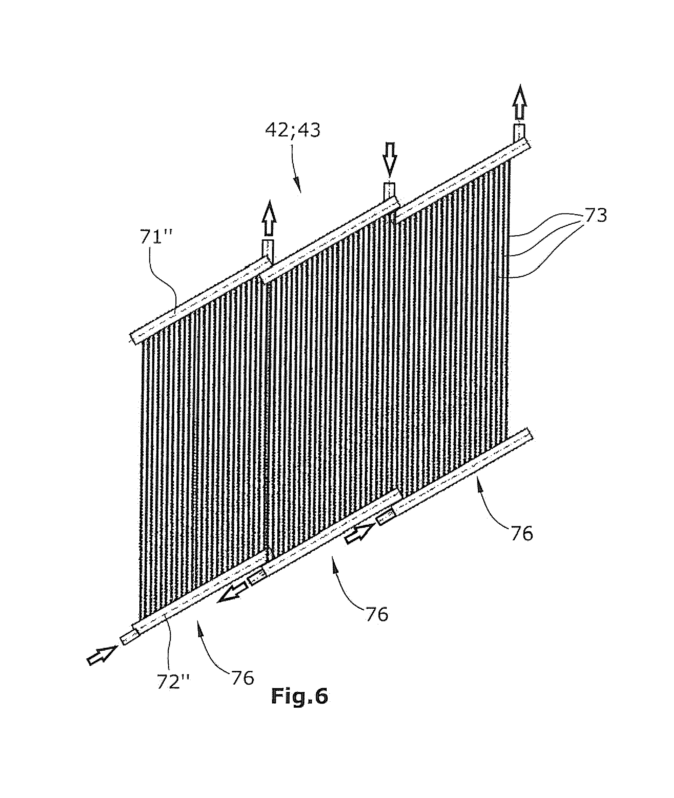

In der Figur 6 ist ein zweites Ausführungsbeispiel eines seitlichen Absorptionselements 42;43 bzw. 45;46 in seitlicher Draufsicht dargestellt. Das Absorptionselement 42;43 besteht aus drei Einzelelementen 76, die fluidisch parallel zueinander geschaltet sind. Jedes Einzelelement 76 weist ein zur Horizontalebene geneigtes Verteilerrohr 72" und ein parallel dazu geneigtes Sammelrohr 71" auf, zwischen denen jeweils mehrere vertikale Absorptionsrohre 73 angeordnet sind. Die drei Einzelelemente 76 sind leicht gestuft zueinander angeordnet, so dass sich an den Schnittstellen eine vertikale Abstufung ergibt. Auf diese Weise kann die mittlere Neigung an dem unteren Ende des Absorptionselements 42; 43 an die lokale Neigung des angrenzenden Öffnungsrandes des Empfängergehäuses 30 bzw. des betreffenden Gehäuseelementes 32,33 bzw. 35,36 angepasst werden, obwohl die Neigung des Verteilerrohrs 72" nicht exakt der lokalen Neigung des angrenzenden Öffnungsrandes entspricht.

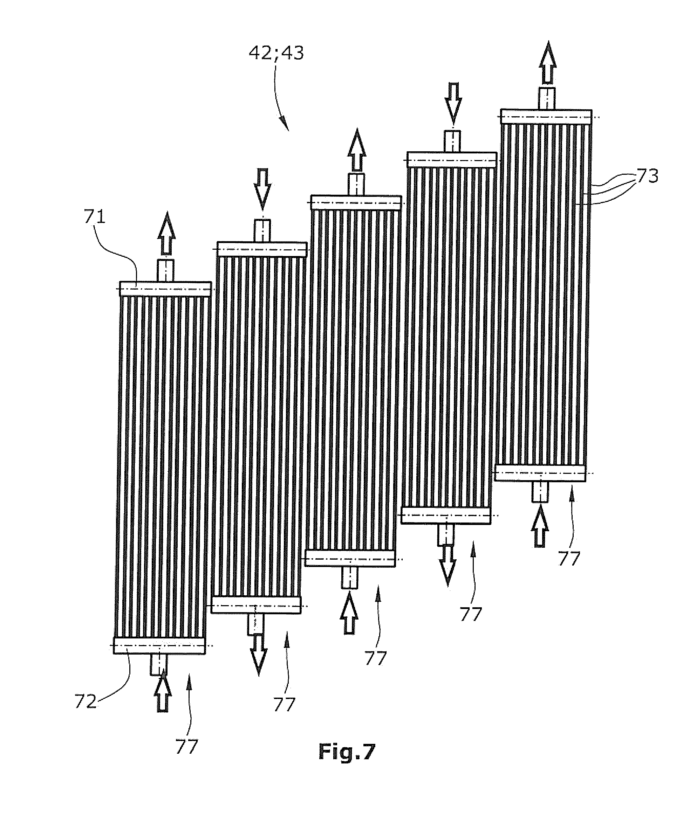

In der Figur 7 ist ein weiteres Ausführungsbeispiel eines seitlichen Absorptionselements 42;43 bzw. 45;46 in seitlicher Draufsicht dargestellt. Das Absorptionselement 42;43 besteht aus fünf rechteckigen Einzelelementen 77, die fluidisch in Reihe und/oder parallel geschaltet sein können. Die Einzelelemente 77 sind gestuft zueinander angeordnet, so dass sich an den Schnittstellen zwischen zwei benachbarten Einzelelementen 77 jeweils eine vertikale Stufe ergibt. Auf diese Weise kann die mittlere Neigung des Absorptionselement 42; 43 abgestuft an die lokale Neigung des angrenzenden Öffnungsrandes des Empfängergehäuses 30 bzw. des betreffenden Gehäuseelementes 32,33 bzw. 35,36 angepasst werden. Jedes Einzelelement 77 ist im Prinzip so ausgebildet, wie das in den Figuren 3 und 4 dargestellte Absorptionselement. Allerdings weist das Einzelelement 77 relativ wenige vertikale Absorptionsrohre 73 auf. Auf diese Weise kann mit einem einzigen standardisierten Einzelelement 77 jedes Absorptionselement 41-46 durch eine entsprechende Zusammenstellung und Anordnung mehrerer relativ kleiner rechteckiger Einzelelemente 77 hergestellt werden.

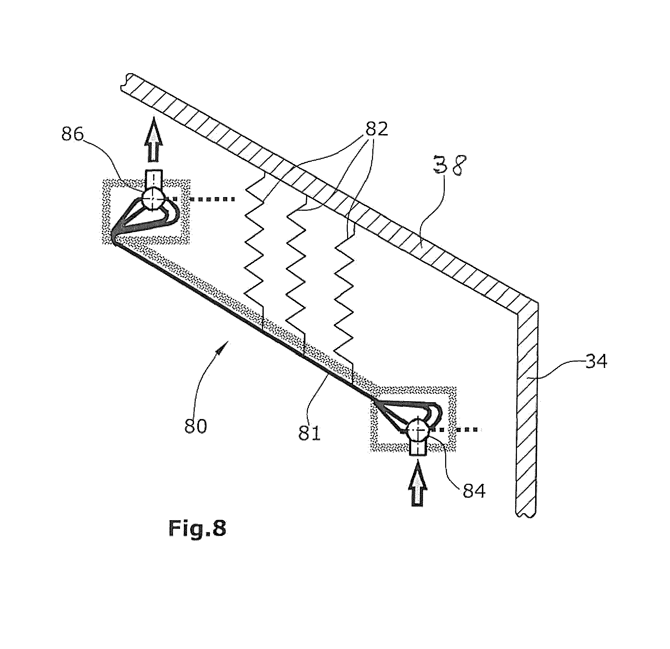

In der Figur 8 ist ein erstes Ausführungsbeispiel eines dachseitigen Absorptionselementes 80 im Längsschnitt dargestellte. Das dachseitige Absorptionselement 80 ist über vertikale Federelemente 82 an der Dach-Gehäusewand 32 flexibel aufgehängt. Auch das dachseitige Absorptionselement 80 weist an seinem unteren Ende ein horizontal angeordnetes Verteilerrohr 84 und an seinem oberen Ende ein paralleles horizontales Sammelrohr 86 auf, zwischen denen mehrere zueinander parallele Absorptionsrohre 81 angeordnet sind. Die Absorptionsrohre 81 liegen in einer Rohrebene, die ungefähr parallel zu der Grundebene der Dach- Gehäusewand 38 ist.

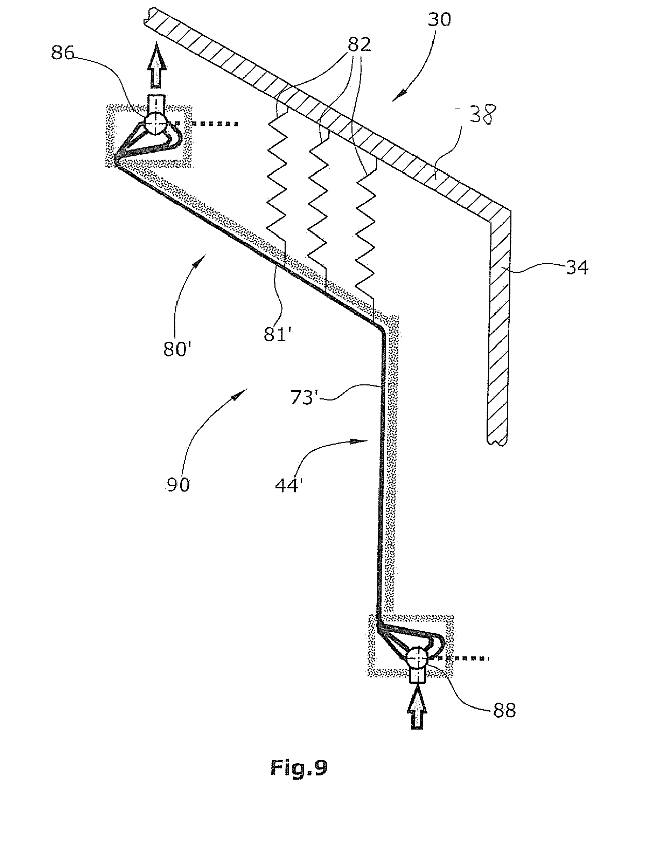

In der Figur 9 ist ein zweites Ausführungsbeispiel eines dachseitigen Absorptionselements 80' dargestellt, das mit dem rückseitigen Absorptionselement 44' funktionell und fluidisch zusammengefasst ist. Die vertikalen Absorptionsrohre 73' setzen sich an ihrem oberen Ende fort in den Absorptionsrohren 81' des dachseitigen Absorptionselements 80', so dass auf diese Weise ein Doppel-Absorptionselement 90 gebildet wird.

## Patentansprüche

1. Thermisches Solarturm-Kraftwerk (10) mit einem zentralen Solarempfänger (12) und einem Heliostaten-Feld (14), wobei
der Solarempfänger (12) einen einen Hohlraum (18) umschließenden Empfängerkörper (20) aufweist, der in dem Hohlraum (18) ein Absorptionselement (41 - 46) aufweist, in dem eine Wärmeträger-Flüssigkeit fließt,
der Empfängerkörper (20) eine zu dem Heliostaten-Feld (14) nach unten orientierte Strahlungsöffnung (22) aufweist, und
die Eröffnungsebene (27) der Strahlungsöffnung (22) um mindestens 10° zur Horizontalebene (62) geneigt ist.

2. Thermisches Solarturm-Kraftwerk (10) nach Anspruch 1, wobei die Öffnungsebene (27) der Strahlungsöffnung (22) zwischen 20° und 50° zur Horizontalebene (62) geneigt ist.

3. hermisches Solarturm-Kraftwerk (10) nach einem der vorangegangenen Ansprüche, wobei der Solarempfänger (12) ein Verschlusselement (28) aufweist, das zwischen einer Schließposition, in der das Verschlusselement (28) die Strahlungsöffnung (22) verschließt und einer Öffnungsposition, in der die Strahlungsöffnung (22) geöffnet ist, bewegt werden kann.

4. Thermisches Solarturm-Kraftwerk (10) nach einem der vorangegangenen Ansprüche, wobei das Absorptionselement (41-46) mehrere vertikale und zueinander parallele Absorptionsrohre (73) gleicher Länge aufweist.

5. thermisches Sotarturm-Kraftwerk (10) nach einem der vorangegangenen Ansprüche, wobei der Empfängerkörper (20) im Wesentlichen als angeschnittener Prismenkörper mit vertikalen Absorptionselementen (41-46) ausgebildet ist.

6. Thermisches sölarturm-Kraftwerk (10) nach einem der vorangegangenen Ansprüche, wobei die Wärmeträger-Flüssigkeit ein im Betriebszustand flüssiges Salz ist, das bevorzugt Natrium- oder Kaliumnitrat enthält.

7. Thermisches Solarturm-Kraftwerk (10) nach einem der Ansprüche 1-5, wobei die Wärmeträger-Flüssigkeit ein im Betriebszustand flüssiges Metall ist, und besonders bevorzugt von Natrium oder einer eutektischen Natrium-Kalium-Legierung gebildet wird.

8. Thermisches Solarturm-Kraftwerk (10) nach einem der vorangegangenen Ansprüche, wobei das Absorptionselement (41-46) mindestens ein Absorptionsrohr (73) aufweist, das aus austenitischem Stahl oder einer Nickelbasis-Legierung besteht.

9. Solarempfänger (12) für ein thermisches Solarturm-Kraftwerk (10), wobei der Solarempfänger (12) die Merkmale einer der Ansprüche 1 bis 8 aufweist.
